Europäisches Patentamt

European Patent Office

Office européen des brevets

(11) Publication number: **0 076 567**
**A1**

# (12) EUROPEAN PATENT APPLICATION

(21) Application number: **82304485.4**

(22) Date of filing: **25.08.82**

(51) Int. Cl.³: **B 60 T 8/18**
**B 60 T 8/24**

(30) Priority: **06.10.81 GB 8130096**

(43) Date of publication of application:
**13.04.83 Bulletin 83/15**

(84) Designated Contracting States:
**DE FR GB IT SE**

(71) Applicant: **CLAYTON DEWANDRE COMPANY LIMITED**
**P.O. Box 9 Titanic Works**
**Lincoln, LN5 7JL(GB)**

(72) Inventor: **Keegan, Colin M.P.**
**30 Moor Lane**
**Mertin Lincoln, LN4 3RB(GB)**

(74) Representative: **Hartley, David et al,**
**4 Dyer's Buildings Holborn**
**London EC1N 2JT(GB)**

(54) **Load sensing valve.**

(57) A load sensing valve for vehicle braking systems of the kind in which the ratio of output pressure to input pressure of a brake valve (12) is adjustable by a balancing beam mechanism (14) the moment arm ratio of which is adjustable by a transmission (40, 45, 48) having non-linear displacement characteristics whereby non-linearities in the balance beam mechanism (14) are compensated to produce a near linear overall valve response.

EP 0 076 567 A1

Croydon Printing Company Ltd

## LOAD-SENSING VALVE

This invention relates to a load-sensing valve for vehicle braking systems.


Such valves are known for regulating the braking pressure in accordance with vehicle load and are widely used in air pressure braking systems. Basically valves of this kind comprise a brake valve connected to an actuator through a balancing beam mechanism the moment arm ratio of which is adjustable usually by moving the fulcrum of the beam to vary the ratio of the pressure output of the brake valve to the pressure at the input thereof. The adjustment can be achieved in a variety of ways, e.g. by a mechanical linkage responsive to the suspension loading or by fluid means responsive to the pressure of fluid in a pneumatic or hydraulic suspension system. Known load-sensing valves, however, suffer from linearity errors which can be as high as 25% for certain air pressure valves.


In accordance with the present invention we propose a load sensing valve in which the moment arm ratio of the balancing beam mechanism is adjustable by a transmission connected to an input actuator responsive to variation in the load, the output displacement of the transmission being a non-linear function of its input in the sense to compensate for non-linearities in the balance beam mechanism.  By choice of a suitable transmission it is possible significantly to reduce or even avoid altogether linearity errors in load-sensing valves.

The transmission is preferably a mechanical linkage comprising a bell-crank lever one end of which has a sliding pivotal connection with the input actuator.  Where adjustment of the moment arm ratio is achieved by moving the pivot of the balance beam mechanism, the other end of the bell crank lever may be linked to the pivot, which is normally a roller running along the beam, by a simple connecting rod or lever.

Embodiments of the present invention will now be described by way of example with reference to the accompanying drawings in which:

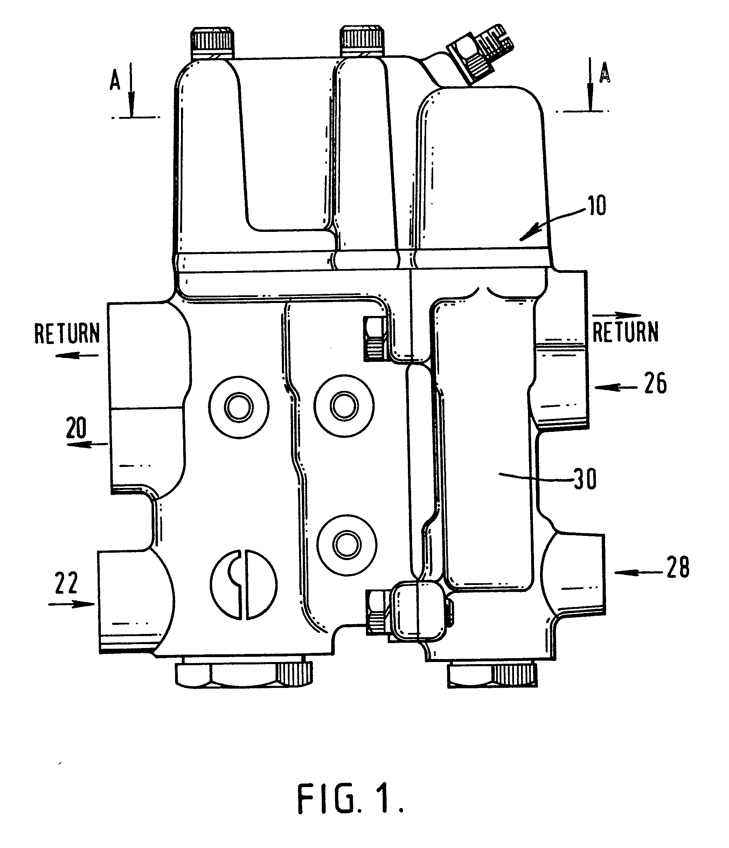

Figure 1 shows a full power load-sensing valve adapted for use with a hydro-pneumatic suspension system;

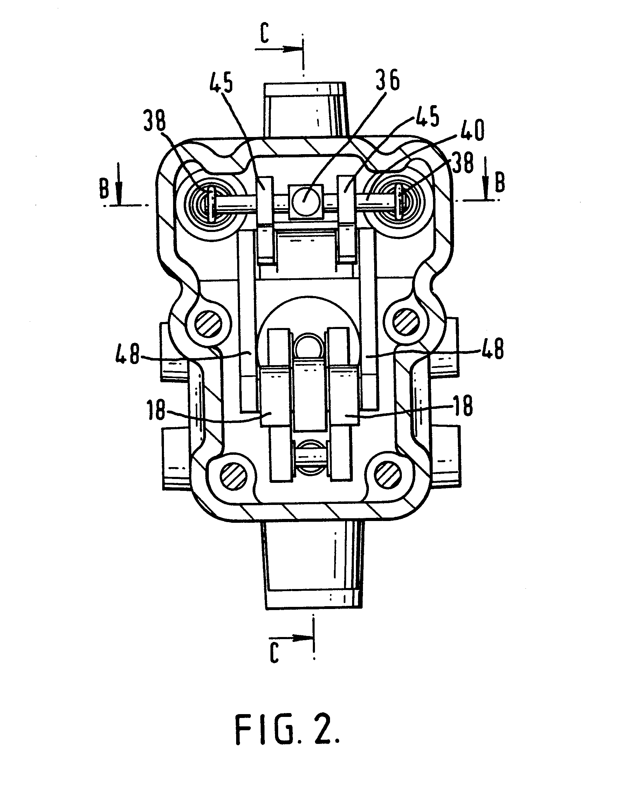

Figure 2 is a cross-section taken on $\overrightarrow{AA}$ in Figure 1;

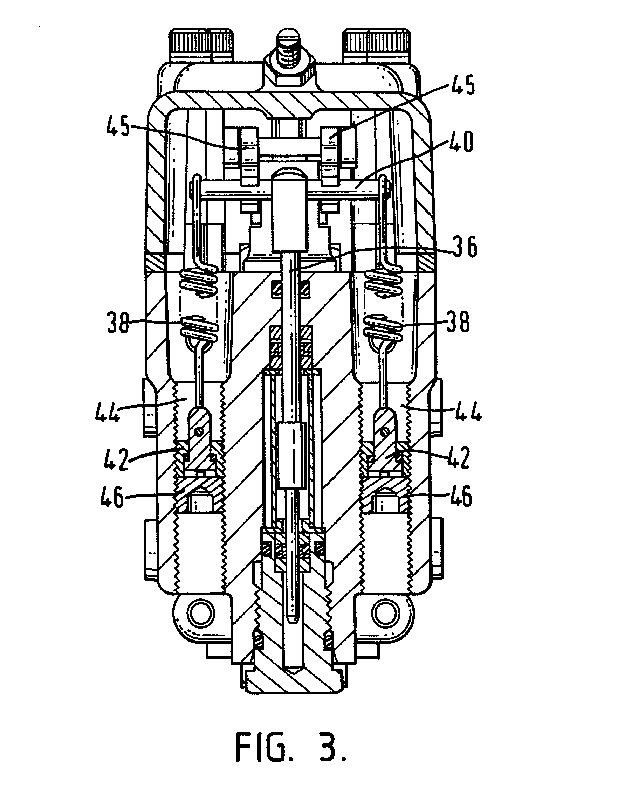

Figure 3 is a cross-section taken on $\overrightarrow{BB}$ in Figure 2;

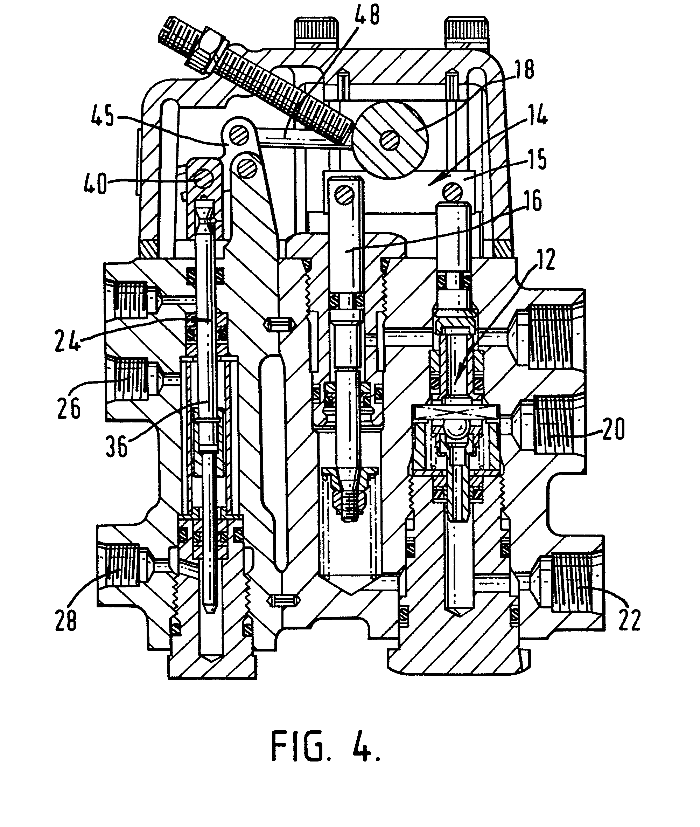

Figure 4 is a cross-section taken on $\overrightarrow{CC}$ in Figure 2; and

Figures 5 and 6 show an alternative embodiment of a load-sensing valve according to the invention.

The load-sensing valve body 10 houses a stirrup brake valve 12 of the kind described in our earlier British Patent Specification No. 1 420 680 which is connected through a balancing beam mechanism 14 to an actuator 16.  The mechanism 14 comprises two parallel balancing beams 15 pivoted on rollers 18 having a common axle 19.  The position of the rollers being adjustable to vary the ratio of the pressure output at delivery port 20 to the brake valve input pressure which is applied at port 22. Adjustment of the pivot position is achieved by means of actuator 24 which is sensitive to the vehicle suspension loading.  Pressure signals from the left and right side suspension struts (not shown) are applied to signal ports 26 and 28 in the actuator (24) housing 30, and act respectively on areas 32 and 34 of an actuator rod or piston 36, displacement of the actuator rod 36, in opposition to adjustable graduating springs 38 acting on ends of a transverse pin or rod 40 fixed to the actuator rod 36, being proportional to the average suspension loading.

The graduating springs 38 are adjustable by means of screwed spring anchors 42 running in parallel bores 44 and locked in position by screwed blanking plugs 46.

The displacement of the actuator rod 36 is transferred to the balance beam pivot by a linkage the output displacement of which bears a non-linear relationship with its input and selected to compensate for existing non-linearities so as to produce for a given input pressure a substantially linear relationship between the suspension pressure (i.e. the load) and the brake valve output pressure. This linkage comprises two bell crank levers 45 one end of which is bifurcated to engage the transverse rod 40 and connecting rods 48 each pivoted at one end to one of the bell crank levers 45 and at the other end to the axle of the associated roller.

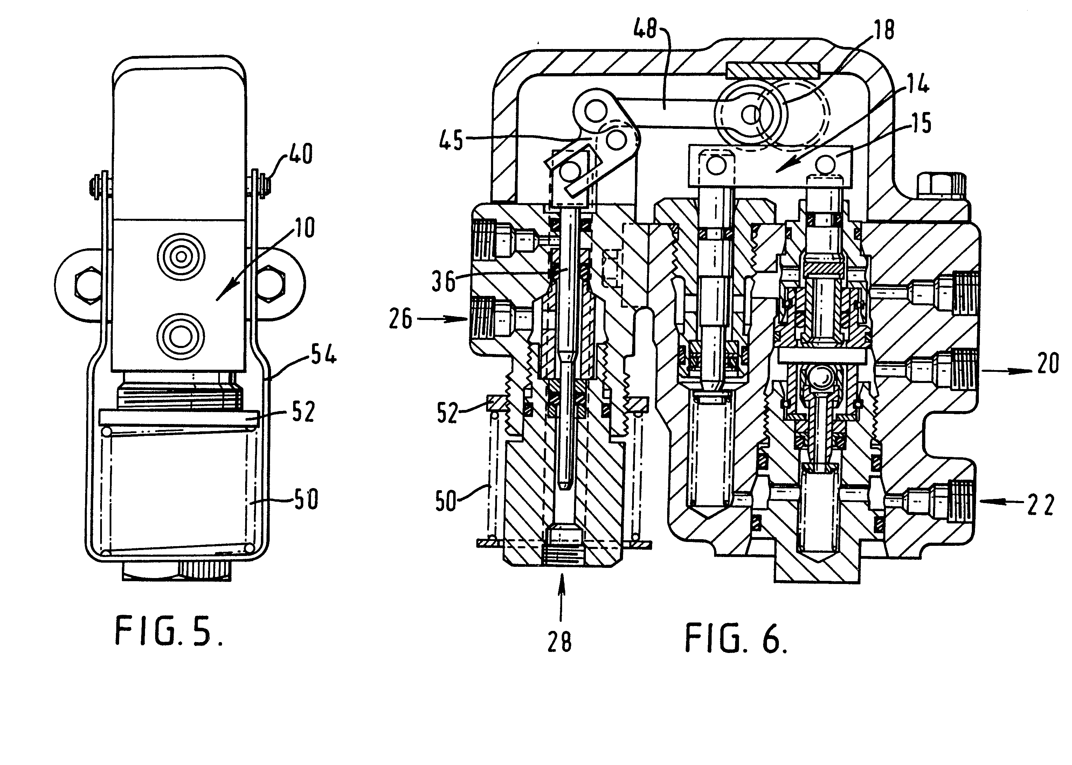

In an alternative embodiment shown in Figures 5 and 6, a single graduating spring 50 may be mounted externally around the actuator housing 30 and acts between a screwed ring 52, the position of which can be adjusted by hand, and a cage 54 secured at its upper end to the transverse pin or rod 40. The ends of which extend through slots in the valve body 10.

The pivot adjusting mechanism described above enables a theoretical linearity error of only 3% over a range of pressure ratios (output : input) ranging from 1:1 to 4.5:1. By comparison a typical known air pressure valve operating upon a similar principle but without a linkage between the travel actuator and the balance beam pivot has a theoretical linearity error of 25% over the same pressure ratios.

In the above described embodiments, the input actuator is operated hydraulically but this is not essential. The input actuator may be driven, in response to variations in the applied load, by any suitable means which may, for example, constitute or comprise pneumatic, electrical, mechanical or hydraulic elements or any combination thereof.

CLAIMS:

1.    A load sensing valve comprising a brake valve (12) connected to an actuator through a balancing beam mechanism (14), the moment arm ratio of  which is adjustable to vary the ratio of the pressure output of the brake valve (12) to the pressure input thereof, characterised in that the moment arm ratio of the balancing beam mechanism is adjustable by a transmission  (40, 45, 48) connected to an input actuator (24) responsive to variations in the load the output displacement of the transmission being a non-linear function of its input in the sense to compensate for non-linearities in the balance beam mechanism (14).

2.    A valve according to claim 1 wherein the transmission is a mechanical linkage comprising a bell crank lever (45) one end of which has a sliding pivotal connection (40,45) with the input actuator (24).

3.    A valve according to claim 2 wherein the moment arm ratio is adjustable by moving the pivot of the balance beam mechanism, the other end of the bell crank lever (45) being linked to the pivot by a connecting rod or lever (48).

4.    A valve according to claim 2 or claim 3 wherein the input actuator (24) is displaceable by hydraulic means (26, 28, 32, 34).

5.    A valve according to claim 4 wherein pressure signals, in use derived from the right and left side suspension struts of a vehicle, are applied to signal ports (26, 28) in the actuator housing (30) and act to displace the actuator rod (36), in opposition to adjustable graduating spring means (38), in proportion to the average vehicle suspension loading.

6.    A load sensing valve constructed and arranged substantially as hereinbefore described with reference to and as illustrated in the accompanying drawings.

FIG. 1.

FIG. 2.

0076567

3 / 5

FIG. 3.

FIG. 4.

FIG. 6.

FIG. 5.

# EUROPEAN SEARCH REPORT

**European Patent Office**

**0076567**
Application number

EP 82 30 4485

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 T 8/18 |
| X | US-A-2 408 123 (PICKERT) *The whole document; figures 1,2,3* | 1,2,3 | B 60 T 8/24 |
| | --- | | |
| X | US-A-2 405 632 (BALDWIN) *THe whole document; figures 1,2,3,4* | 1,2,3,4 | |
| | --- | | |
| X | DE-B-1 137 474 (KNORR-BREMSE) *Column 2, line 51 to column 4, line 2; figure 2* | 1,2,3 | |
| | --- | | |
| Y | FR-A-2 293 343 (WABCO WESTINGHOUSE) *The whole document; figure 1* | 1,5 | |
| | --- | | **TECHNICAL FIELDS SEARCHED (Int. Cl. ³)** |
| A,D | GB-A-1 420 680 (CLAYTON DEWANDRE COMPANY) | 1 | |
| | --- | | B 06 T 8/00 |
| A | US-A-2 110 704 (FARMER) *Figure 14* | 1,2,3 | |
| | --- | | |
| A | US-A-2 376 598 (MILLER) *Figures 1,2* | 1,2,3 | |
| | ----- | | |

The present search report has been drawn up for all claims

| Place of search THE HAGUE | Date of completion of the search 12-01-1983 | Examiner BRAEMS C.G.I. |
|---|---|---|

CATEGORY OF CITED DOCUMENTS
X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82